# EUROPÄISCHE PATENTSCHRIFT

(11) **EP 1 960 225 B1**
(45) Veröffentlichungstag und Bekanntmachung des Hinweises auf die Patenterteilung: **02.03.2011**
(21) Anmeldenummer: 06818965.3
(22) Anmeldetag: 02.12.2006
(51) Int. Cl.: B60K 35/00

(54) **FAHRZEUG-ANZEIGEVORRICHTUNG**
VEHICLE DISPLAY DEVICE
TABLEAU DE BORD POUR VEHICULE

(30) Priorität: 09.12.2005 DE 102005058976
(43) Veröffentlichungstag der Anmeldung: 27.08.2008
(73) Patentinhaber: Volkswagen Aktiengesellschaft, 38436 Wolfsburg (DE)
(72) Erfinder: NILL, Mathias, 38106 Braunschweig (DE)
(74) Vertreter: Banzer, Hans-Jörg
(86) Internationale Anmeldenummer: PCT/EP2006/011584
(87) Internationale Veröffentlichungsnummer: WO 2007/065612

(56) Entgegenhaltungen:
- EP-A2- 0 846 588
- WO-A-98/09846
- WO-A1-03/057523
- FR-A1- 2 667 026
- US-A1- 2002 154 003

## Beschreibung

Die vorliegende Erfindung beschreibt eine Fahrzeug-Anzeigevorrichtung, welche in einem ersten Modus zur Anzeige einer ersten Analoganzeige-Information über eine erste Fahrzeugkomponente.ausgelegt ist.

Anzeigevorrichtungen mit mindestens einem beweglich eingesetzten Zeiger werden häufig als Analoganzeigen bezeichnet. Diese Analoganzeigen haben sich zur Übermittlung von Informationen über den Zustand eines Fahrzeugs an einen Fahrer bewährt. Dabei weisen Analoganzeigen gegenüber von Zahlenanzeigen den Vorteil auf, dass der Fahrer einen an der Analoganzeige angezeigten Wert schneller bezüglich seiner Signifikanz einschätzen kann.

Um ein besseres Einschätzen der Fahrparameter bezüglich ihrer Verfügbarkeit durch den Fahrer zu erreichen offenbart die Druckschrift DE 102 39 386 A1 eine Anzeigeinrichtung und ein Verfahren zu deren Betrieb. Dabei wird von mindestens einem fahrzeugrelevanten Parameter der momentan prozentual beanspruchte und/oder zur Verfügung stehende Anteil berechnet und, vorzugsweise über eine Analoganzeige, angezeigt.

Eine Anzeigevorrichtung und ein Verfahren zum Darstellen eines Anzeigeinstruments durch eine Pixet-Matrix-Anzeige beschreibt die Druckschrift DE 199 03 201 A1. Die Anzeigevorrichtung weist dabei eine durch ein Display gebildete Anzeigefläche mit einem Anzeigeinstrument, einer Skale, Symbolen und einer Blende auf.

Die Druckschrift DE 102 26 083 A1 beschreibt eine Segmentdisplay-Anzeigevorrichtung mit einer Mehrzahl von in einer Serie angeordneten beleuchtbaren Anzeigesegmenten zur Anzeige eines Systemzustand eines zu überwachenden Systems. Wahlweise sind über die Segmentdisplay-Anzeigevorrichtung mindestens zwei voreinander verschiedene Arten von Systemzuständen anzeigbar. Eine Auswahl der Betriebsart erfolgt durch die untefschiedliche Einbaulagen der Anzeigevorrichtung in einem Armaturenbrett.

Ein Tachometer mit einer dualen Anzeige für ein Kraftfahrzeug ist in der Druckschrift DE 38 34 229 A1 offenbart, wobei die Anzeige ein Skalensystem für niedrige Geschwindigkeitswerte und ein Skalensystem für hohe Geschwindigkeitswerte enthält. Die Druckschrift DE 197 05 452 A1 beschreibt eine Doppelskala für Kombiinstrumente, wobei mindestens eines der mindestens zwei aus Skalenelementen aufgebauten Skalensysteme sichtbar gemacht werden kann. Auch die Messvorrichtung der Druckschrift DE 38 37 592 A1 weist eine automatisch umschaltbare Messskala mit den jeweiligen Dimensionen der gemessenen physikalischen Größen auf.

Die Anzeigeeinrichtung für Kraftfahrzeuge der Druckschrift DE 87 14 769 U1 umfasst ein digitales Anzeigeelement und ein analoges Anzeigeelement mit einer Skala und einem Zeiger, wobei das digitale Anzeigeelement und der Zeiger aus Segmenten bestehen, die zwischen einem visuell wahrnehmbaren und einem nichtsichtbaren Zustand schaltbar sind. Auf diese Weise sollen die Vorteile hinsichtlich der Funktion und des Betriebs der analogen Anzeigeelemente herkömmlicher Ausbildung mit den Vorteilen der Anwendung von digitalen Anzeigeelementen verbunden werden.

Da sich Analoganzeigen gegenüber Zahlenanzeigen so vorteilhaft bewährt haben, ist es für einen Fahrer von Vorteil, wenn das Armaturenbrett seines Fahrzeugs mit mehreren Analoganzeigen bestückt ist. In der Druckschrift DE 195 32 427 C1 ist eine Kombinationsanzeigeeinheit für ein Kraftfahrzeug mit einem Primäranzeigeelement und mindestens einem Sekundäranzeigeelement zur Darstellung und Anzeige von verschiedenen, regelmäßig erfassten Betriebsparametern offenbart, wobei dem Benutzer das Erreichen eines kritischen Betriebsparameterwerts visuell, durch Veränderung der optischen Darstellung des betreffenden Sekundäranzeigeelements angezeigt wird. Erfindungsgemäß ist im Normalbetrieb nur das zur Geschwindigkeitsanzeige dienende Primäranzeigeelement mit einer erhöhten Grundhelligkeit beleuchtet, während bei Erreichen des kritischen Betriebsparameterwerts das betreffende Sekundäranzeigeelement ebenfalls mit erhöhter Grundhelligkeit beleuchtet wird.

Das elektrische Kombiinstrument der Druckschrift DE 103 04 190 A1 ist mit analogen und/oder digitalen Anzeigeinstrumenten bestückt, wobei die mechanischen, optischen und elektrischen Bauteile der Anzeigeinstrumente auf einer Schaltungsträgereinrichtung angebracht sind und die elektronische Ansteuerung der Anzeigeinstrumente auf einer separaten Funktionsleiterplatte angeordnet ist. Die als Leiterplatte ausgebildete Schalturigsträgereinrichtung und die Funktionsleiterplatte sind elektrisch miteinander verbunden, wobei mindestens alle optischen Bauteile auf der Oberseite der Leiterplatte angeordnet sind.

Ein Nachteil von Analoganzeigen gegenüber Zahlenanzeigen liegt in ihrer Größe. Um ein schnelles optisches Erfassen einer Analoganzeige-Information zu ermöglichen, muss die zugehörige Anzeigevorrichtung eine Mindestgröße aufweisen, die deutlich über einer Mindestgröße einer Zahlenanzeige liegt. Die Kombinationsanzeigeeinheit der Druckschrift DE 195 32 427 C1 und das Kombiinstrument der Druckschrift DE 103 04 190 A1 beanspruchen deshalb jede für sich eine relativ große Anbringfläche auf einem Armaturenbrett.

Um zu gewährleisten, dass ein Fahrer die auf einer Analoganzeige angezeigte Analoganzeige-Information gut erkennen kann sollte die Kombinationsanzeigeeinheit oder das Kombiinstrument in unmittelbarer Nähe zum Fahrer an dem Armaturenbrett angebracht werden. Zusätzlich sollte in Reichweite des Fahrers noch genügend Anbringfläche für die einzelnen Bedienelemente zur Steuerung des Fahrzeugs verbleiben. Dies stellt Probleme bei der Realisierung eines derartigen Armaturenbretts, da die in unmittelbarer Nähe zum Fahrer liegende Fläche des Armaturenbretts begrenzt ist.

Zur Lösung dieses Problems schlägt die Druckschrift DE 87 14 769 U1 eine Anzeigeeinrichtung für Kraftfahrzeuge vor, wobei für wenigstens einen der angezeigten Parameter ein digitales Anzeigeelement und ein analoges Anzeigeelement vorgesehen sind. Das digitale Anzeigeelement besteht dabei aus Segmenten, die zwischen einem sichtbaren und einem unsichtbaren Funktionszustand umsteuerbar sind. Das analoge Anzeigeelement besteht aus einer Skala und einem Zeiger, der ebenfalls aus Segmenten besteht, die zwischen einem unsichtbaren und einem sichtbaren Funktionszustand umsteuerbar sind.

Das Kombiinstrument für ein Kraftfahrzeug der Druckschrift DE 197 40 575 A1 weist eine elektrooptische Anzeigeeinrichtung und mindestens eine benachbart dazu angeordnete analoge Anzeigeeinrichtung auf. Dabei wird ein Abschnitt der analogen Anzeigeeinrichtung von zumindest einem Abschnitt der elektrooptischen Anzeigeeinrichtung überdeckt. Über eine auf der analogen Anzeigeeinrichtung angebrachte Leuchtschicht kann dieser überdeckte Abschnitt bei Bedarf sichtbar gemacht werden.

Allerdings ist die über die Vorrichtungen der Druckschriften DE 87 14 769 U1 und DE 197 40 575 A1 eingesparte Anbringfläche relativ gering. Zusätzlich lassen sich die entsprechenden Vorrichtungen zur Anzeige von mindestens zwei an verschiedenen Fahrzeugkomponenten erfassten Parametern nur nutzen, wenn mindestens einer dieser Parameter als Zahlenwert und nicht als Analoganzeige-Information angezeigt wird. Die eingesparte Anbringfläche in damit mit einem Verlust der oben genannten Vorteile einer Analoganzeige verbunden.

Die EP 0 846 588 A2 betrifft eine Anzeigevorrichtung für ein Fahrzeug nach dem Oberbegriff des Anspruchs 1. Die Anzeigevorrichtung umfasst ein Paar von Flüssigkristallfarbanzeigeeinheiten, welche in das Armaturenbrett des Fahrzeugs eingebaut sind, um Informationen anzuzeigen, einen Speicher, eine Datenauswahleinheit in der Nähe des Schalthebels und eine Verarbeitungseinheit, welche mit dem Speicher und der Datenauswahleinheit zusammenarbeitet und die Anzeigeeinheiten ansteuert. Mit Hilfe der Datenauswahleinheit kann der Fahrer des Fahrzeugs Informationsanzeigeparameter, wie zum Beispiel eine Art, eine Größe, eine Farbe und eine Darstellungsform ändern und frei an eigene Anforderungen anpassen, indem er aus einer Anzahl von Menüeinträgen, welche auf den Anzeigeeinheiten dargestellt werden, auswählt.

Die Aufgabe der vorliegenden Erfindung besteht darin, eine wenig Anbringfläche erfordernde Möglichkeit zur Anzeige von mindestens zwei an verschiedenen Fahrzeugkomponenten erfassten Informationen unter Beibehaltung der Vorteile einer Analoganzeige zu finden.

Die Aufgabe wird erfindungsgemäß gelöst durch eine Fahrzeug-Anzeigevorrichtung gemäß Anspruch 1, welche in einem ersten Modus zur Anzeige einer ersten Analoganzeige-Information über eine erste Fahrzeugkomponente ausgelegt ist, wobei die Fahrzeug-Anzeigevorrichtung von dem ersten Modus in einen zweiten Modus schaltbar ist, und wobei die Fahrzeug-Anzeigevorrichtung in dem zweiten Modus zur Anzeige einer zweiten Analoganzeige-Information über eine zweite Fahrzeugkomponente ausgelegt ist.

Über eine erfindungsgemäße Fahrzeug-Anzeigevorrichtung ist es möglich, Informationen über mindestens zwei Fahrzeugkomponenten als Analoganzeige-Informationen einem Fahrer über eine Anzeigevorrichtung anzuzeigen, welche nicht mehr Platz am Armaturenbrett als eine herkömmliche Analoganzeige beansprucht. Dabei liegt der Erfindung die Erkenntnis zugrunde, dass es ausreichend ist, bestimmte Fahrzeuginformationen, wie beispielsweise einen Füllstand des Benzintanks, eine Kühlwassertemperatur, eine Öltemperatur oder den Turbodruck nur in bestimmten Situationen einem Fahrer anzuzeigen.

Beispielsweise kann der Füllstand des Benzintanks dem Fahrer nach einer Betätigung eines Bedienelements angezeigt werden. Der Fahrer hat in diesem Fall selbst die Möglichkeit zu bestimmen, wann er über welche Fahrzeugkomponente informiert werden möchte. Als Alternative oder als Ergänzung dazu kann die Fahrzeug-Anzeigevorrichtung eine Steuereinrichtung aufweisen, welche Informationen der zugehörigen Fahrzeugkomponenten bezüglich ihrer Wichtigkeit auswertet. Die Steuereinrichtung ist in diesem Fall zur Schaltung der Fahrzeug-Anzeigevorrichtung in Abhängigkeit der ausgewerteten Informationen ausgelegt. Eine Schaltung kann in Situationen ausführbar sein, in denen die neu angezeigte Analoganzeige-Information den Fahrer über einen kritischen Zustand der zugehörigen Fahrzeugkomponente informiert.

Die erfindungsgemäße Fahrzeug-Anzeigevorrichtung ist eine Analoganzeige mit mindestens einem Zeigerelement, wie beispielsweise eine Rundskala oder eine Linearskala.

Unter einer Analoganzeige-Information ist dabei zu verstehen, dass die erfindungsgemäße Fahrzeug-Anzeigevorrichtung einem Betrachter ein Bild mit einem "Zeiger" und mit einer "Skalierung" bietet. Dabei dient der "Zeiger" dazu, auf die Position der "Skalierung" zu deuten, welche einem an einer Fahrzeugkomponente erfassten Wert entspricht.

Die vorliegende Erfindung wird nun anhand der beigefügten Zeichnungen näher erläutert, in denen zeigen:
- Figur 1: ein erfindungsgemäßes Kombiinstrument in einem ersten Modus; und
- Figur 2: das Kombiinstrument in einem zweiten Modus.

Das nachfolgend näher geschilderte Ausführungsbeispiel stellt eine bevorzugte Ausführungsform der vorliegenden Erfindung dar.

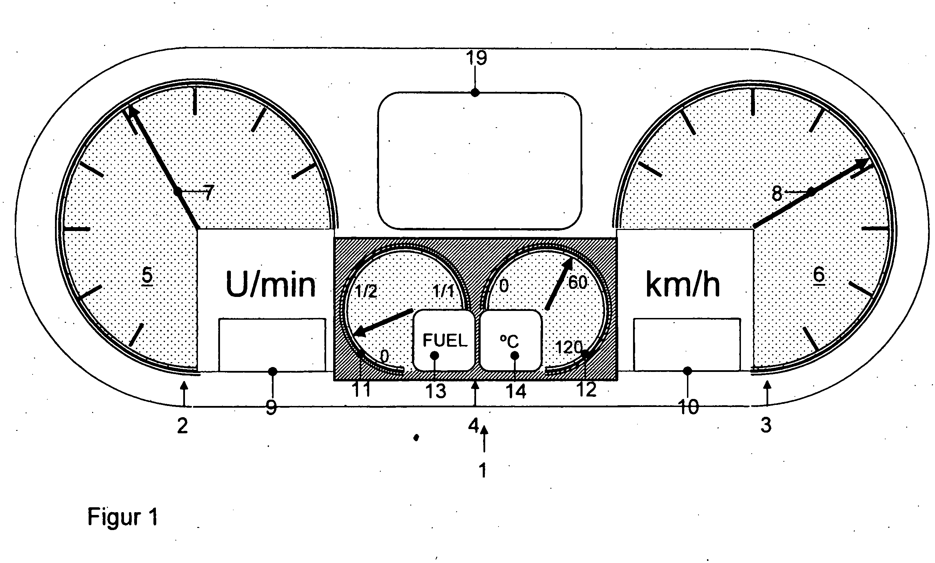

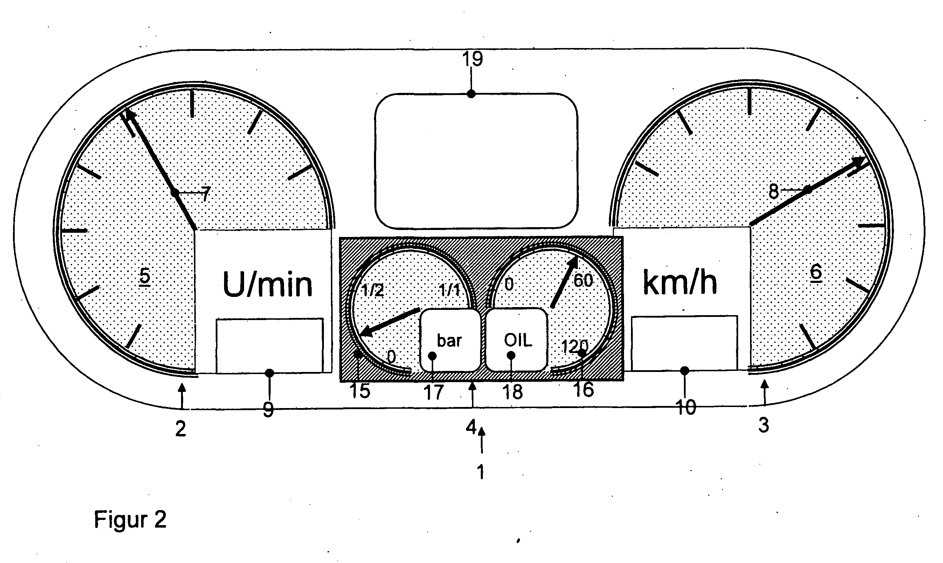

Das erfindungsgemäße Kombiinstrument 1 aus Figur 1 und 2 weist zwei Analoganzeigen 2 und 3 und eine Anzeige 4 auf. Die Analoganzeigen 2 und 3 sind Rundskalen 5 und 6 mit drehbar eingesetzten Zeigern 7 und 8. Sie dienen dazu, einen Fahrer über die Drehzahl und die Geschwindigkeit seines Fahrzeugs zu informieren. Die auf den Analoganzeigen 2 und 3 angezeigten Werte sind zusätzlich noch über die Zahlenanzeigen 9 und 10 anzeigbar. Die Anzeige 4 ist dazu ausgelegt, einem Fahrer zwei Rundskalen mit drehbar eingesetzten Zeigern darzubieten.

Figur 1 zeigt das erfindungsgemäße Kombiinstrument 1 in einem ersten Modus. In diesem ersten Modus des Kombiinstruments 1 beziehen sich die "Zeiger-Rundskalen" 11 und 12 der Anzeige 4 auf den Tankinhalt und die Kühlwassertemperatur. Die angezeigten Skalierungen der "Zeiger-Rundskalen" 11 und 12 beziehen sich auf die jeweils angezeigten Messwerte. Die Stellung der "Zeiger" gibt die erfassten Messwerte wieder. Zusätzlich erscheinen neben den "Zeiger-Rundskalen" 11 und 12 die Symbole 13 und 14, welche einen Betrachter optisch übermitteln, auf welche Fahrzeugkomponenten und welche erfassten Werte sich die "Zeiger-Rundskalen" 11 und 12 beziehen. Auch die Einheit des angezeigten Messwerts kann einem Fahrer über die Symbole 13 und 14 mitgeteilt werden.

Das erfindungsgemäße Kombiinstrument 1 kann über eine Betätigung des Lenkstockhebels von dem ersten Modus in einen zweiten Modus geschaltet werden. Ebenso kann das Kombiinstrument 1 über eine entsprechende Eingabe des Fahrers wieder in den ersten Modus zurückgeschaltet werden.

In Figur 2 ist das erfindungsgemäße Kombiinstrument 1 im zweiten Modus dargestellt. Dabei zeigt die Anzeige 4 im zweiten Modus des Kombiinstruments 1 anstelle der "Zeiger-Rundskalen" 11 und 12 die "Zeiger-Rundskalen" 15 und 16, welche sich auf den Turbodruck und die Öltemperatur beziehen. Den Symbolen 17 und 18 kann der Fahrer entnehmen, auf welche Fahrzeugkomponenten sich die angezeigten Werte der "Zeiger-Rundskalen" 15 und 16 beziehen.

Selbstverständlich kann ein erfindungsgemäßes Kombiinstrument 1 noch weitere Modi zur Anzeige weiterer Fahrzeugparameter über die Anzeige 4 aufweisen. Auch die Analoganzeigen 2 und 3 können so ausgelegt sein, dass auf ihnen noch weitere Messwerte anzeigbar sind. Eine zusätzliche Digital/Analoganzeige 19 kann zur weiteren Informationsübermittlung genutzt werden.

Als Ergänzung kann das erfindungsgemäße Kombiinstrument 1 eine Auswerteeinrichtung aufweisen, welche die über die Anzeige 4 anzeigbaren Messwerte bezüglich ihrer momentanen Signifikanz überprüft. Erfasst die Auswerteeinrichtung dabei beispielsweise, dass der Tankinhalt unterhalb einer kritischen Schwelle liegt, so kann die "Zeiger-Rundskala" 11 für den Tankinhalt auf der Anzeige 4 automatisch erscheinen.

Des Weiteren kann die Anzeige 4 in einer derartigen Situation die "Zeiger-Rundskala" 11 entsprechend markieren. Beispielsweise kann die "Zeiger-Rundskala" 11 dabei in einer anderen Farbe anzeigbar sein oder mit einer bestimmten Sequenz aufblinken.

Das in Figur 1 und 2 gezeigte erfindungsgemäße Kombiinstrument 1 erfüllt die Funktion eines 6-Augen-Kombiinstruments. Über die vorliegende Erfindung beansprucht das Kombiinstrument 1 an einem Armaturenbrett eines Fahrzeugs jedoch nicht mehr Platz als ein 4-Augen-Kombiinstrument. Dennoch kann ein Fahrer dem Kombiinstrument 1 nicht nur die darauf angezeigten Fahrzeugparameter, sondern auch die Signifikanz dieser Fahrzeugparameter entnehmen. Die für ein 6-Augen-Kombiinstrument nötige Anbringfläche konnte somit über die vorliegende Erfindung verringert werden, wobei das erfindungsgemäße Kombiinstrument 1 einem Fahrer die Vorteile von 6 Analoganzeigen bietet.

### Bezugszeichenliste

- 1: Kombiinstrument
- 2 und 3: Analoganzeigen
- 4: Digitalanzeige
- 5 und 6: Rundskalen
- 7 und 8: Zeiger
- 9 und 10: Zahlenanzeigen
- 11 und 12: "Zeiger-Rundskalen"
- 13 und 14: Symbole
- 15 und 16: "Zeiger-Rundskalen"
- 17 und 18: Symbole
- 19: Analog/Digitalanzeige

## Patentansprüche

1. Fahrzeug-Anzeigevorrichtung (4), welche in einem ersten Modus zur Anzeige einer ersten Analoganzeige-Information (11,12) über eine erste Fahrzeugkomponente ausgelegt ist, wobei
die Fahrzeug-Anzeigevorrichtung (4) von dem ersten Modus in einen zweiten Modus schaltbar ist, wobei die Fahrzeug-Anzeigevorrichtung (4) in dem zweiten Modus zur Anzeige einer zweiten Analoganzeige-Information (15,16) über eine zweite Fahrzeugkomponente ausgelegt ist,
**dadurch gekennzeichnet, dass** die Fahrzeug-Anzeigevorrichtung (4) eine Analoganzeige mit mindestens einem beweglich eingesetzten Zeigerelement und einer Skala umfasst, wobei das mindestens eine Zeigerelement auf eine Position der Skala deutet, welche einem Wert entspricht, welcher in Abhängigkeit von dem Modus an der entsprechenden Fahrzeugkomponente erfasst wird.

2. Fahrzeug-Anzeigevorrichtung (4) nach Anspruch 1 mit einer Steuereinrichtung zur Erfassung einer ersten Information über die erste Fahrzeugkomponente und/oder einer zweiten Information über die zweite Fahrzeugkomponente, wobei die Steuereinrichtung ausgelegt ist, die Fahrzeug-Anzeigevorrichtung (4) in Abhängigkeit der ersten Information und/oder der zweiten Information von dem ersten Modus in den zweiten Modus und/oder von dem zweiten Modus in den ersten Modus zu schalten.

3. Fahrzeug-Anzeigevorrichtung (4) nach Anspruch 1 oder 2, wobei in dem ersten Modus oder in dem zweiten Modus ein Füllstand eines Benzintanks, eine Kühlwassertemperatur, eine Öltemperatur, ein Turbodruck, eine Uhrzeit, eine Drehzahl und/oder eine Fahrzeuggeschwindigkeit anzeigbar ist.

4. Kombiinstrument (1) mit mindestens einer Fahrzeug-Anzeigevorrichtung nach einem der Ansprüche 1-3.

## Claims

1. Vehicle display device (4) which is designed in a first mode to display a first item of analogue display information (11, 12) via a first vehicle component,
it being possible to switch the vehicle display device (4) from the first mode into a second mode, the vehicle display device (4) being designed in the second mode to display a second item of analogue display information (15, 16) via a second vehicle component,
**characterized in that** the vehicle display device (4) comprises an analogue display with at least one movably employed pointer element and a scale, the at least one pointer element pointing to a position of the scale which corresponds to a value which is detected as a function of the mode of the corresponding vehicle component.

2. Vehicle display device (4) according to Claim 1, having a control device for detecting a first item of information via the first vehicle component and/or a second item of information via the second vehicle component, in which the control device is designed to switch from the first mode into the second mode and/or from the second mode into the first mode as a function of the first item of information and/or the second item of information.

3. Vehicle display device (4) according to Claim 1 or 2, in which a filling level of a petrol tank, a cooling water temperature, an oil temperature, a turbo pressure, a time, a rotational speed and/or a vehicle speed can be displayed in the first mode or in the second mode.

4. Combination instrument (1) comprising at least one vehicle display device according to one of Claims 1-3.

## Revendications

1. Dispositif d'affichage de véhicule (4), qui est conçu dans un premier mode pour afficher une première information en affichage analogique (11, 12) sur un premier composant du véhicule,
le dispositif d'affichage de véhicule (4) pouvant être commuté du premier mode dans un deuxième mode, le dispositif d'affichage de véhicule (4), dans un deuxième mode, étant conçu pour afficher une deuxième information en affichage analogique (15, 16) sur un deuxième composant du véhicule,
**caractérisé en ce que** le dispositif d'affichage de véhicule (4) comprend un affichage analogique avec au moins un élément d'aiguille inséré de manière déplaçable et une échelle, l'au moins un élément d'aiguille montrant une position sur l'échelle qui correspond à une valeur qui est détectée en fonction du mode au niveau du composant correspondant du véhicule.

2. Dispositif d'affichage de véhicule (4) selon la revendication 1, comprenant un dispositif de commande pour détecter une première information sur le premier composant du véhicule et/ou une deuxième information sur le deuxième composant du véhicule, le dispositif de commande étant conçu pour commuter le dispositif d'affichage de véhicule (4) en fonction de la première information et/ou de la deuxième information du premier mode dans le deuxième mode et/ou du deuxième mode dans le premier mode.

3. Dispositif d'affichage de véhicule (4) selon la revendication 1 ou 2, dans lequel, dans le premier mode ou dans le deuxième mode, un niveau de remplissage d'un réservoir d'essence, une température de l'eau de refroidissement, une température de l'huile, une turbopression, l'heure, le régime et/ou une vitesse du véhicule peuvent être affichés.

4. Instrument combiné (1) comprenant au moins un dispositif d'affichage de véhicule selon l'une quelconque des revendications 1 à 3.
